# FASCICULE DE BREVET EUROPEEN

(11) **EP 4 353 503 B1**
(45) Date de publication et mention de la délivrance du brevet: **23.07.2025**
(21) Numéro de dépôt: 23201427.4
(22) Date de dépôt: 03.10.2023
(51) Int. Cl.: B60J 5/04, B60N 2/75

(54) **PORTE LATÉRALE DE VÉHICULE AUTOMOBILE**
SEITENTÜR EINES KRAFTFAHRZEUGS
SIDE DOOR FOR A MOTOR VEHICLE

(30) Priorité: 12.10.2022 FR 2210455
(43) Date de publication de la demande: 17.04.2024
(73) Titulaire: Renault s.a.s, 92100 Boulogne Billancourt (FR)
(72) Inventeur: BOUILLON, Jean-Charles, 78280 GUYANCOURT (FR)

(56) Documents cités:
- FR-A1- 3 045 683
- JP-A- 2007 216 924
- JP-A- 2015 182 673

## Description

La présente invention se rapporte à une porte latérale de véhicule automobile permettant de prévenir les conséquences des impacts latéraux.

Des portes latérales de véhicules automobiles connues comprennent un caisson délimité par deux tôles en regard, une tôle extérieure et une tôle intérieure. La tôle intérieure est orientée vers l'habitacle du véhicule automobile, tandis que la tôle extérieure définit une portion de paroi extérieure du véhicule. Les deux tôles convergent l'une vers l'autre dans la partie supérieure du caisson en définissant une fente apte à autoriser le passage d'une paroi vitrée.

La tôle intérieure est recouverte d'une garniture accrochée au caisson en regard de la paroi intérieure, et la garniture présente une portion en relief définissant un flanc d'appui formant accoudoir, et conséquemment, un espace libre entre la garniture et la paroi intérieure. La garniture est usuellement réalisée dans une plaque en matériau polymère thermoformée et elle est par exemple recouverte d'un textile.

En outre, la porte est équipée d'un boîtier encastré à travers le flanc d'appui et venant s'étendre à l'intérieur de l'espace libre. Le boîtier affleure à la surface du flanc d'appui et il présente une bordure périphérique venant en prise dans le flanc d'appui. Ainsi, il est maintenu en position fixe à travers le flanc d'appui.

Le boîtier comporte usuellement un logement en creux, dénommé « bénitier », et il se prolonge, le cas échéant, sur le flanc d'appui, par des contacteurs électriques permettant d'actionner la paroi vitrée. Le logement en creux permet de former poignée pour tirer la porte vers l'habitacle du véhicule automobile.

Aussi, à l'intérieur de l'espace libre, une équerre est installée sur la tôle intérieure et elle vient s'étendre sous le boîtier auquel elle est rattachée. De la sorte, l'équerre permet à la fois d'améliorer le maintien en position fixe du boîtier, et aussi, de pouvoir reprendre les efforts exercés sur le flanc d'appui formant accoudoir. Le document FR 3 045 683 A1 divulgue un tel boîtier supporté par une équerre.

En revanche, lorsque la porte est percutée par un autre véhicule automobile, sa déformation peut provoquer, notamment, une dislocation du boîtier et de la garniture. En effet, si l'impact est important, il provoque l'enfoncement de la paroi extérieure, puis ensuite, celui de la paroi intérieure sur laquelle elle vient s'appuyer. La déformation de la paroi intérieure vers l'intérieur de l'habitacle tend alors à entraîner l'équerre en translation et en pivotement de sorte que le boîtier tend lui, à être entraîné en saillie du flanc d'appui. Le bord contondant de la bordure périphérique du boîtier peut alors être agressif pour le coude du passager du véhicule automobile.

Aussi, un problème qui se pose et que vise à résoudre la présente invention est de fournir une porte latérale sans risque pour les passagers en cas de choc latéral.

Dans ce but, il est proposé une porte latérale de véhicule automobile comprenant : un caisson comportant une paroi intérieure et une paroi extérieure s'étendant en regard l'une de l'autre ; une garniture accrochée audit caisson en regard de ladite paroi intérieur, ladite garniture présentant une portion en relief définissant, d'une part un espace libre entre ladite garniture et ladite paroi intérieur et d'autre part, un flanc d'appui formant accoudoir ; un boîtier engagé à l'intérieur dudit espace libre à travers ledit flanc d'appui, ledit boîtier présentant une bordure périphérique solidaire dudit flanc d'appui pour maintenir ledit boîtier en position fixe ; une équerre présentant une partie de fixation solidaire de ladite paroi intérieure et une partie en porte-à-faux s'étendant dans ledit espace libre, ledit boîtier prenant appui sur ladite partie en porte-à-faux. Ladite partie en porte-à-faux comprend deux bras en regard l'un de l'autre solidaires de la partie de fixation et une platine de réception solidaire des deux bras, la platine de réception étant adaptée à se désolidariser des bras lorsque le caisson est enfoncé et que ladite paroi intérieur et ledit boîtier sont entraînés en mouvement l'un vers l'autre, de manière à libérer ledit boîtier de ladite paroi intérieure, par quoi ladite bordure périphérique dudit boîtier demeure solidaire dudit flanc d'appui.

Ainsi, une caractéristique de l'invention réside dans la mise en œuvre d'une équerre démembrable, comprenant deux bras solidaires de la partie de fixation et une platine de réception montée sur les deux bras de manière à pouvoir se désolidariser des deux bras lorsque les contraintes qui s'exercent sur elles dépassent un certain seuil.

En effet, la fonction essentielle de l'équerre est de transmettre les efforts que peut exercer un usager sur le flanc d'appui formant un accoudoir, à la paroi intérieur du caisson de la porte. Ces efforts s'exercent selon une composante verticale du haut vers le bas et sont généralement compris entre 50 daN et 100 daN, par exemple 70 daN.

À l'inverse, lorsque le caisson est enfoncé et que la paroi extérieure vient déformer la paroi intérieure selon une composante horizontale, et plus précisément transversal, la platine de réception va se désolidariser des bras de l'équerre, alors que les contraintes qu'elle subit sont inférieures à la valeur des efforts que peut exercer un usager notamment lorsque les contraintes sont comprises entre 2 daN et 10 daN.

De la sorte, la paroi intérieure et le boîtier sont désolidarisés l'un de l'autre, et le boîtier demeure encastré dans la portion en relief de la garniture. Partant, sa bordure périphérique demeure en prise dans le flanc d'appui et elle ne vient pas heurter l'usager.

Préférentiellement, ladite platine de réception s'étend entre lesdits deux bras. De la sorte, les efforts spécifiquement liés à un choc latéral vont pouvoir provoquer la désolidarisation de la platine de réception et des bras.

Aussi, la platine de réception est avantageusement sensiblement écartée de la partie de fixation de l'équerre de manière à faciliter le mouvement relatif de la platine de réception et de la partie de fixation comme on l'expliquera plus en détail dans la suite de la description.

Avantageusement et de manière non limitative, la platine de réception est mobile entre une position écartée de la partie de fixation dans laquelle elle est en prise avec les deux bras opposés et une position rapprochée de la partie de fixation dans laquelle elle est libre des deux bras opposés. De la sorte, lorsque la paroi intérieure et le boîtier sont entraînés en mouvement l'un vers l'autre, la platine de réception peut se désolidariser de la partie de fixation.

Selon un mode de réalisation de l'invention, lesdits bras opposés s'étendent en escalier, et ils comprennent deux premières portions écartées l'une de l'autre, à distance de ladite partie de fixation et respectivement prolongées par deux secondes portions libres rapprochées l'une de l'autre à l'opposé de ladite partie de fixation.

Autrement dit, les bras opposés s'étendent en escalier en convergeant l'un vers l'autre à l'opposé de la partie de fixation. Ainsi, ils comprennent chacun trois parties ; une partie solidaire de la partie de fixation, une partie intermédiaire correspondant à la première portion et une partie libre correspondant à la seconde portion.

Préférentiellement, la platine de réception comprend deux bords opposés présentant successivement deux premiers décrochement et deux seconds décrochements opposés définissant respectivement deux premières ailes écartées l'une de l'autre et deux secondes ailes rapprochées l'une de l'autre, lesdites premières et secondes ailes étant adaptées à venir en prise respectivement dans lesdites premières et secondes portions de bras opposés.

Aussi, la platine de réception présente une forme complémentaire aux bras opposés afin de pouvoir coopérer avec eux comme on l'expliquera ci-après.

Selon un autre mode de réalisation, lesdits deux seconds décrochements opposés se prolongent respectivement à l'opposé desdits deux premiers décrochement par des pattes flexibles respectivement terminées par un ergot de blocage. De la sorte, la platine de réception offre une résistance au mouvement par rapport aux deux bras, grâce aux pattes flexibles dont les ergots sont aptes à venir en prise par clipsage dans les extrémités libres des deux bras opposés.

Préférentiellement, lesdites premières et secondes portions de bras présentent respectivement des fentes en regard formant des glissières et s'étendant selon une composante perpendiculaire à ladite partie de fixation. De la sorte, la platine de réception peut être ajustée entre les bras opposés de façon que les deux premières ailes viennent s'ajuster en amont des premières portions vers la partie de fixation, tandis que les deux secondes ailes viennent en amont des deuxièmes portions. Ensuite, la platine de réception peut être entraînée en translation dans un sens opposé à la partie de fixation, de manière que les deux premières ailes viennent en prise dans les fentes en regard des deux premières portions, et que les deux secondes ailes viennent en prise dans les fentes en regard des deux secondes portions. Elle est alors entraînée en translation dans ce sens jusqu'à ce que les pattes flexibles viennent en prise dans les extrémités libres des deux bras opposés.

Ainsi, la platine de réception est bloquée en translation selon une direction verticale comme on l'expliquera dans la suite de la description.

En outre, ladite partie en porte-à-faux est sensiblement inclinée par rapport à la normale à ladite partie de fixation. Comme on l'expliquera dans la suite de la description, la partie en porte-à-faux est inclinée à l'opposé de la partie supérieure du caisson de manière à s'étendre sensiblement parallèlement au flanc d'appui qui est lui-même incliné sensiblement. Le boîtier s'étend alors entre le flanc d'appui et la partie en porte-à-faux sensiblement perpendiculairement. Cela permet au boîtier de prendre appui à plat sur la partie en porte-à-faux.

Préférentiellement, ledit boîtier et ladite partie en porte-à-faux sont reliés ensemble par une pièce de liaison vissable. De la sorte, le boîtier est aisément solidarisé à la partie en porte-à-faux. Par exemple, le boîtier présente un fond et la pièce de liaison vissable est engagée à travers le fond puis ensuite à travers la partie en porte-à-faux.

En outre, ladite partie en porte-à-faux comprend avantageusement au moins un fût s'étendant à travers ladite platine de fixation pour former cheville. De la sorte, la liaison entre les pièces de liaison vissable et la partie en porte-à-faux est plus rigide. Par exemple, le fût s'étend de la platine de réception à l'opposé de la face sur laquelle vient prendre appui le boîtier. Au surplus, il présente avantageusement une section oblongue transversale afin d'offrir une pluralité de position de fixation. Préférentiellement, la partie en porte-à-faux comprend deux fûts espacés l'un de l'autre de manière à offrir encore plus de possibilités de fixation.

Selon un mode de réalisation préférée, ladite partie de fixation présente une face d'accrochage opposée à ladite partie en porte-à-faux, ladite face d'accrochage comprenant deux crochets latéraux s'étendant respectivement à l'opposé desdits bras et un pion encliquetable situé sensiblement sur la médiatrice d'un segment joignant lesdits deux crochets. Ainsi, les deux crochets et le pion encliquetable définissent un triangle sensiblement isocèle. La paroi intérieure du caisson présente alors trois orifices, deux premiers orifices définissant une droite sensiblement horizontale et un deuxième orifice situé au-dessus. Ainsi, lors du montage, les deux crochets peuvent être engagés respectivement dans les deux premiers orifices, tandis que l'équerre est entraînée en pivotement pour venir engager le pion encliquetable à travers le deuxième orifice et par là-même, appliquer la partie de fixation contre la paroi intérieure. D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
[Fig. 1] est une vue schématique en coupe transversale d'une porte latérale de véhicule automobile ;
[Fig. 2] est une vue schématique en coupe transversale de la porte latérale illustrée sur la [Fig. 1] en situation de choc latéral ;
[Fig. 3] est une vue schématique en perspective de trois quarts avant d'un élément de l'invention ;
[Fig. 4] est une vue schématique de dessus de l'objet de la [Fig. 3] dans un premier état ;
[Fig. 5] est une vue schématique du dessus de l'objet de la [Fig. 3] dans un deuxième état ;
[Fig. 6] est une vue schématique en coupe transversale de détail de l'objet de la [Fig. 3] installé dans une porte latérale dans une situation de choc.

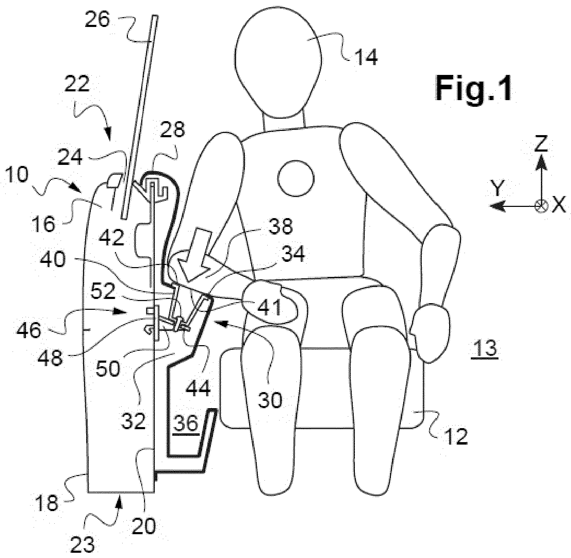

La [Fig. 1] montre en coupe une porte droite 10 de véhicule automobile, par exemple la porte du passager avant. Aussi elle s'inscrit dans un repère orthogonal X, Y, Z, dans lequel l'axe X s'étend selon une direction longitudinale avant-arrière du véhicule automobile, orienté vers l'arrière ; l'axe Y s'étend selon une direction transversale du véhicule, orienté de la gauche vers la droite ; et l'axe Z s'étend selon une direction verticale, orienté à l'opposé du sol.

Ainsi, la [Fig. 1] montre un siège avant droit 12 situé à l'intérieur d'un habitacle 13 du véhicule automobile, et sur lequel est installé un passager 14.

Aussi, la porte 10 comporte un caisson métallique 16 délimité par deux tôles opposées, une tôle extérieure 18 et une tôle intérieure 20. Le caisson métallique 16 présente un bord supérieur 22 opposé à un bord inférieur 23 et les deux tôles 18, 20, convergent vers le bord supérieur 22 en délimitant une fente 24. Cette fente 24 permet le passage d'une paroi vitrée 26, laquelle vient coulisser à travers entre une position escamotée à l'intérieur du caisson 16 et une position étendue à l'extérieur.

En outre, la porte comporte vers l'habitacle 13 et en regard de la paroi intérieure 20 du caisson 16, une garniture 28, ou habillage intérieur de la porte 10. La garniture 28 est thermoformée dans un matériau polymère et elle est recouverte d'un textile d'habillage. Aussi, elle vient recouvrir la paroi intérieure 20 du caisson 16, depuis le bord supérieur 22 du caisson 16 jusqu'au bord inférieur 23.

Sensiblement à mi-distance entre les deux bords supérieur 22 et inférieur 23, la garniture 28 présente une portion en relief 30, laquelle définit un espace libre 32 entre la paroi intérieure 20 et la garniture 28 et en outre, un flanc d'appui 34 adapté à former accoudoir.

Par ailleurs, la garniture 28 est formée, vers le bord inférieur 23, en retour de manière à constituer un vide-poche 36.

Sur la [Fig. 1] le passager 14 présente un coude 38 en appui sur le flanc d'appui 34.

Aussi, la porte 10 comprend un boîtier 40, autrement dénommé « bénitier », traversant le flanc d'appui 34 par une lumière 41 pratiquée dans le flanc d'appui 34, et venant s'étendre à l'intérieur de l'espace libre 32. Le boîtier 40 présente un bord rabattu 42 formant collerette et à l'opposé, un fond 44. Aussi, le bord rabattu 42 vient en applique contre les bordures de la lumière précitée, du côté de la face d'appui du flanc d'appui 34. On expliquera dans la suite de la description comment le boîtier 40 est maintenu en prise dans la lumière 41 par l'intermédiaire de sa bordure.

En outre, à l'intérieur de l'espace libre 32, une équerre 46 est installée contre la paroi intérieure 20. L'équerre 46, représentée ici selon l'art antérieur, comporte une partie de fixation 48 en applique contre la paroi intérieure 20 et une partie en porte-à-faux 50 s'étendant dans l'espace libre 32. La partie en porte-à-faux 50 vient s'étendre plus précisément sous le boîtier 40 de sorte que le fond 44 du boîtier 40 vient en appui sur la partie en porte-à-faux 50.

De plus, le fond 44 du boîtier 40 reçoit une vis 52 afin de relier ensemble le fond 44 et le porte-à-faux 50.

Ainsi, le boîtier 40 étant à la fois solidaire du flanc d'appui 34 et de l'équerre 46, on comprend que les efforts exercés par le passager 14 avec son coude 38 sur le flanc d'appui 34 formant accoudoir, sont repris en partie par la paroi intérieure 20.

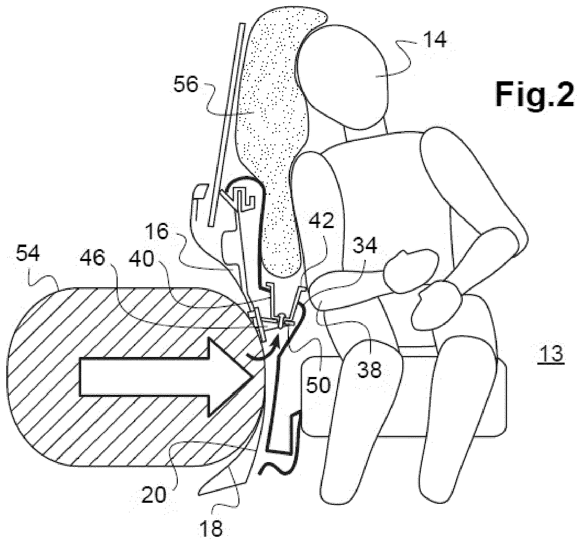

On expliquera en regard de la [Fig. 2] le problème posé par un choc latéral venant enfoncer le caisson 16.

La [Fig. 2] montre en effet tous les éléments représentés sur la [Fig. 1] après qu'ils ont subi un choc latéral au moyen d'un impacteur 54, lequel simule le choc occasionné par l'avant d'un autre véhicule automobile selon une direction transversale -Y et à une vitesse de 65 km/h.

Cet impact provoque l'écrasement du caisson 16 de sorte que la paroi extérieure 18 vient en contact avec la paroi intérieure 20, et la déformation des deux parois 18, 20 se poursuit encore vers l'intérieur du véhicule. L'excursion de la paroi intérieure 20 dans l'habitacle 13 est comprise entre 40 mm et 200 mm.

L'impact se produit sensiblement en dessous du niveau de l'équerre 46, et aussi, il provoque le mouvement de l'équerre 46 non seulement en translation vers l'intérieur de l'habitacle 13, mais aussi en rotation dans le sens antihoraire tel que représenté sur la [Fig. 2].

En conséquence, la partie en porte-à-faux 50 est entraînée vers le haut selon Z, et partant, elle tend à faire ressortir le boîtier 40 de la garniture 28 et du flanc d'appui 34. Le bord rabattu 42 s'écarte alors de la bordure de la lumière et il constitue alors un bord libre contondant pour le passager 14 et notamment son coude.

Le déploiement d'un airbag latéral 56 ne permet pas de préserver le passager 14 du bord rabattu 42 du boîtier 40.

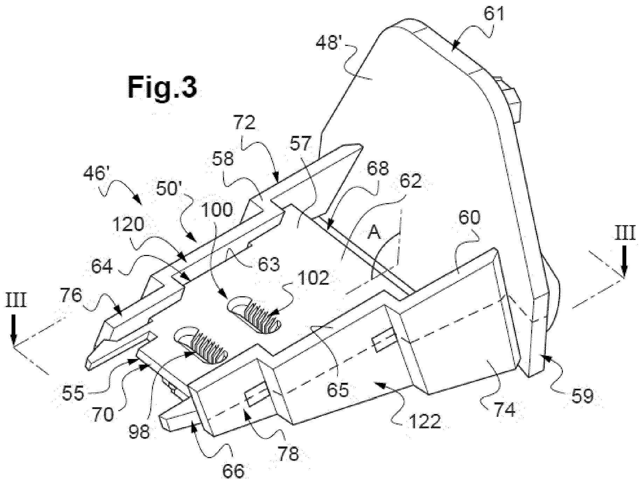

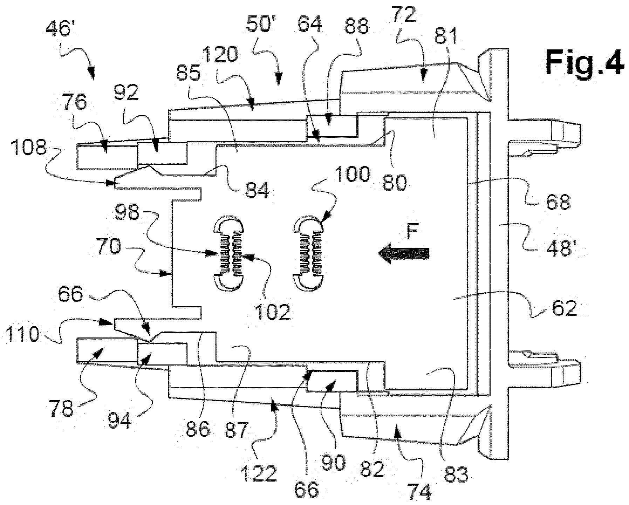

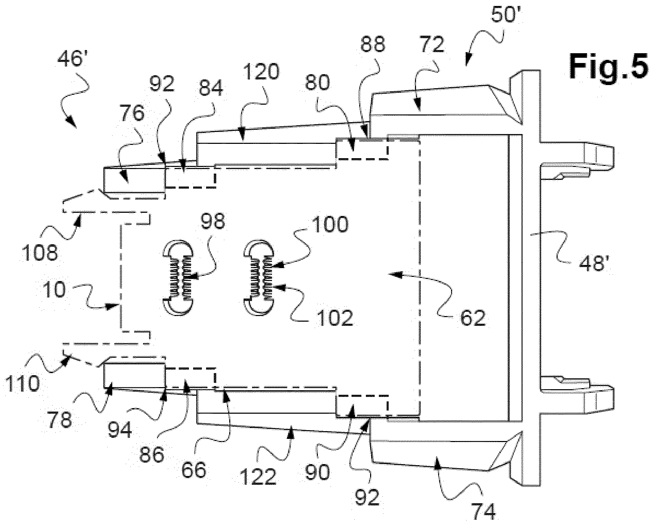

Aussi, pour s'affranchir de ce problème, il est conçu une équerre 46' selon l'invention que l'on décrira tout d'abord en regard des [Fig. 3], [Fig. 4] et [Fig. 5]. Les éléments identiques à celle de l'équerre traditionnelle 46 illustrée sur les [Fig. 1] et [Fig. 2], porteront la même référence affectée d'un signe prime : « ' ».

Aussi, en référence à la [Fig. 3], l'équerre 46' comprend une partie de fixation 48' de forme générale sensiblement trapézoïdale présentant une base 59 opposée à un sommet 61, et une partie en porte-à-faux 50' généralement sensiblement inclinée par rapport à la normale à la partie de fixation 48'.

La partie en porte-à-faux 50' comprend deux bras opposés 58, 60 s'étendant en regard l'un de l'autre depuis la base 59 de la partie de fixation 48' et solidaire de la partie de fixation 48', et une platine de réception 62 en prise entre les deux faces en regard, une première 63 et une seconde 65, des deux bras opposés 58, 60. La platine de réception 62 présente une face supérieure 57 opposée à une face inférieure 55.

Comme on va l'expliquer en détail ci-après, la platine de réception 62 est adaptée à se désolidariser des deux bras opposés 58, 60 lorsque le caisson 16 est enfoncé et que la paroi intérieur 20 et le boîtier 40 sont entraînés en mouvement l'un vers l'autre. De la sorte, le boîtier 40 est libéré de la paroi intérieure 20, et partant, la bordure périphérique 42 du boîtier 40 demeure solidaire du flanc d'appui 34.

Les bras opposés 58, 60 s'étendent selon une composante perpendiculaire à la partie de fixation 48' et la platine de réception est solidaire des deux bras 58, 60 en formant un angle A avec la partie de fixation 48' compris entre 90° et 100°.

Les bras opposés 58, 60 s'étendent en escalier dans un sens opposé à la partie de fixation 48', en convergeant l'un vers l'autre.

Ils comprennent trois paires de portions successives : une paire de portions de liaison solidaires 72, 74 de la partie de fixation 48' ; une première paire de premières portions ou paire de portions intermédiaires 120, 122 et une seconde paire de secondes portions ou paire de portions libres 76, 78.

Autrement dit, les portions de liaison 72, 74 sont écartées l'une de l'autre d'une distance correspondant sensiblement à la largeur de l'embase 59 de la partie de fixation 48'. S'agissant des premières portions 120, 122 de la première paire, elles sont écartées l'une de l'autre d'une distance inférieure à celle qui sépare les portions de liaison 72, 74. Quant aux secondes portions 76, 78 de la seconde paire, elles sont écartées l'une de l'autre d'une distance inférieure à celle qui sépare les premières portions 120, 122.

De plus, les bras opposés 58, 60 sont symétriques l'un de l'autre par rapport à un plan médian perpendiculaire à la partie de fixation 48'.

La platine de réception 62, quant à elle, présente une forme complémentaire à celle des bras opposés notamment par rapport aux faces en regard des bras 58, 60. La platine de réception 42 comprend deux bords opposés 64, 66 aptes à venir en prise dans les bras opposés 58, 60, et un bord postérieur 68 opposé à un bord antérieur 70. La [Fig. 4], illustre, vu de dessus, la partie de fixation 48' vue en coupe horizontale selon le plan III **-** III représenté sur la [Fig. 3]. Elle illustre également la platine de réception 62.

On retrouve sur la [Fig. 4] les portions de liaison 72, 74 en regard l'une de l'autre, prolongées respectivement par les premières portions 120, 122 rapprochées l'une de l'autre et décalées respectivement vis-à-vis des portions de liaison 72, 74. Aussi, les premières portions 120, 122 présentent des premières fentes axiales 88, 90 s'étendant sensiblement sur une longueur correspondant par exemple à un quart de la longueur des premières portions 120, 122 en débouchant vers la partie de fixation 48'. Ces premières fentes axiales 88, 90 s'étendent sensiblement parallèlement au plan de coupe III **-** III précité.

En outre, on retrouve également les deux secondes portions 76, 78 s'étendant dans le prolongement des premières portions 120, 122 respectivement, plus encore rapprochées l'une de l'autre en décalage respectivement par rapport aux premières portions 120, 122.

Les secondes portions 76, 78 présentent également des secondes fentes axiales 92, 94 débouchant également vers la partie de fixation 48'. Les secondes fentes axiales 92, 94 s'étendent sur une distance correspondant sensiblement à la demi-longueur des secondes portions 76, 78

Les premières fentes axiales 88, 90 et les secondes fentes axiales 92, 94 forment des glissières comme on va l'expliquer ci-après.

La platine de réception 62 présente dans ces deux bords opposés 64, 66, de premiers décrochements opposés 80, 82. Ces deux premiers décrochements opposés 80, 82 font alors apparaître deux premières ailes opposées 81, 83. Ces deux premières ailes 80, 83 sont espacées, bord à bord d'une distance sensiblement inférieure à la distance qui sépare les portions de liaison 72, 74 pour pouvoir être engagé entre les deux comme l'illustre la [Fig. 4].

En outre, dans le prolongement des deux premiers décrochements opposés 80, 82, et à l'opposé du bord postérieur 68, les deux bords opposés 64, 66 présentent deux seconds décrochements 84, 86. Ces derniers font apparaître deux secondes ailes opposées 85, 87. Celles-ci sont alors espacées bord à bord d'une distance sensiblement inférieure à la distance qui sépare les deux premières portions 120, 122 deux bras 58, 60.

La platine de réception 62 comprend deux pattes de clipsage 108, 110 s'étendant dans le prolongement des deux seconds décrochements 84, 86. Ces pattes 108, 110 sont élastiquement déformables et munis d'ergot s'étendant à l'opposé l'un de l'autre. Sur la [Fig. 4] on observera que les ergots des pattes de clipsage 108, 110 s'étendent partiellement et respectivement dans les secondes fentes axiales 92, 94.

Au surplus, on observera que les deux secondes ailes opposées 85, 87 s'étendent entre les premières portions 120, 122 de bras 58, 60.

Par ailleurs, la platine de réception 62 présente deux orifices oblongs transversaux, un premier 98 et un second 100, parallèles l'un par rapport à l'autre et situés vers le bord antérieur 70, sensiblement à équidistance des deux bords latéraux 64, 66. Les deux orifices oblongs transversaux 98, 100 s'étendent sensiblement parallèlement au bord antérieur 70 de la platine de réception 62.

De surcroît, les deux orifices oblongs transversaux 98, 100 se prolongent par deux fûts cylindriques s'étendant en saillie de la face inférieure 55 de la platine de réception 62. Ces fûts cylindriques présentent chacun une pluralité de nervures axiales 102 permettant de former une cheville comme on l'expliquera ci-après.

Ainsi, à partir de cette position illustrée sur la [Fig. 4], la platine de réception 62 est entraînée en translation selon la flèche F dans un sens opposé à la partie de fixation 48'.

Partant, les deux premières ailes opposées 81, 83 s'engagent respectivement à coulissement dans les premières fentes axiales 88, 90, tandis que les deux secondes ailes opposées 85, 87 s'engagent elles, respectivement à coulissement dans les secondes fentes axiales 92, 94, et que les deux pattes de clipsage 108, 110 se rapprochent tout d'abord l'une de l'autre pour se relâcher ensuite en bout de course, les ergots respectivement en appui contre des extrémités libres des bras 58, 60, comme illustré sur la [Fig. 5].

La plateforme de réception 62 est ainsi verrouillée entre les deux bras 58, 60. Elle pourra être déverrouillée à l'inverse en entraînant à force la platine de réception 62 vers la partie de fixation 48' comme on l'expliquera la suite de la description.

On observera que la platine de réception 62 est maintenue en position fixe selon une direction sensiblement parallèle à la partie de fixation 48'. Autrement dit, tout mouvement relatif vertical de la platine de réception 62 est interdit.

Ainsi, on comprend que platine de réception 62 peut être entraînée en translation d'une position désolidarisé des bras 58, 60, telle que représentée sur la [Fig. 4] où elle est rapprochée de la partie de fixation 48' et elle est libre par rapport aux bras opposés 58, 60 à une position solidarisée où elle est écartée de la partie de fixation 48' et elle est en prise avec les deux bras opposés 58, 60. La [Fig. 5] illustre l'équerre 46' vu du dessus lorsque la platine de réception 62 est dans la position solidarisée après assemblage, soit en prise dans les bras 58, 60.

On retrouve également sur la [Fig. 5], les deux orifices oblongs transversaux, 98 et 100, prolongés chacun par un fût cylindrique muni de nervures axiales 102.

On observera que la forme des bras opposés et de la plaine de réception n'est pas limitée à l'exemple décrit ci-dessus. Les bras opposés peuvent en effet présenter une forme rectiligne, ils seraient alors parallèles. La platine de réception serait de forme rectangulaire et présenterait alors des créneaux de part et d'autre au niveau des bords opposés et viendrait alors s'engager dans des glissières disposés sur les deux faces en regard des deux bras opposés.

Le nombre de portions de bras n'est également pas limité à trois, ni le nombre de décrochements à deux.

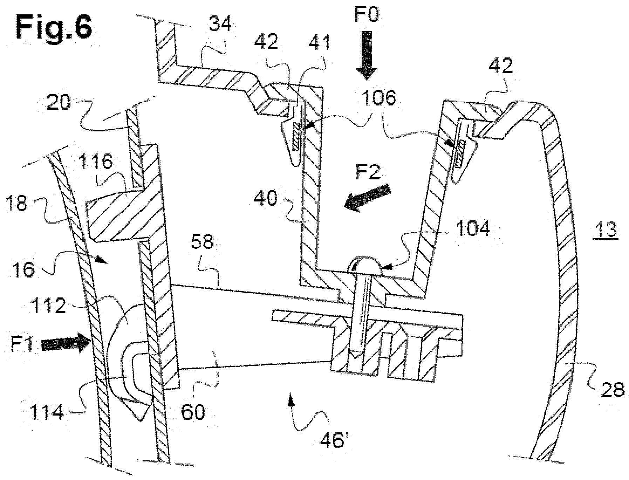

On se rapportera à présent sur la [Fig. 6], montrant en détail l'équerre 46' selon l'invention, installée sur la paroi intérieure 20.

Ainsi, on retrouve sur cette [Fig. 6], la paroi intérieure 20, et l'équerre 46' dont la partie de fixation 48' est maintenue en applique contre la paroi intérieure 20 grâce aux deux crochets 110, 112 engagés à travers la paroi et au pion d'accrochage 116 encliqueté également à travers la paroi 20.

Aussi, les deux bras 58, 60 et la platine de réception 62 viennent s'étendre sous le boîtier 40. On retrouve le fond 44 du boîtier 40, lequel fond 44 est relié à la platine de réception 62 par l'intermédiaire d'une vis de fixation 104 engagée à travers le fond 44 et le fut cylindrique prolongeant le premier orifice oblong 98. La vis de fixation 104 est alors en prise à travers les nervures axiales 102.

On retrouve également le bord rabattu 42 du boîtier 40 en appui contre les bordures de la lumière 41 pratiquée dans le flanc d'appui 34. Ainsi, le bord rabattu 42 est maintenu contre les bordures de la lumière 41, par l'intermédiaire d'agrafes métalliques élastiques 106 qui viennent prendre appui à l'opposé de la face d'appui du flanc d'appui 34.

Ainsi, le boîtier 40 est à la fois solidaire du flanc d'appui 34 par l'intermédiaire des agrafes métalliques élastiques 106, coopérant avec le bord rabattu 42, et aussi de la paroi intérieure 20 du caisson 16 par l'intermédiaire de l'équerre 46'.

L'ensemble est ainsi conçu pour pouvoir résister à une force F0 d'au moins 70 daN, exercée par le passager au moyen de son coude, selon une composante verticale -Z, sensiblement perpendiculairement au flanc d'appui 34. On observera qu'une telle force s'exerce perpendiculairement à la platine de réception 62.

En revanche, lors d'un choc, grâce à l'agencement décrit ci-dessus, et à l'équerre 46', le caisson 16 se déforme et la paroi extérieure 18 vient s'appliquer contre la paroi intérieure 20 qu'elle va venir déformer à son tour. Partant, l'équerre 46' est mise sous charge d'une part sous l'action d'une force latérale F1 provenant du choc, et d'autre part sous l'action d'une force de résistance F2 du boîtier 40, lequel est en prise dans la garniture 28.

Ainsi, lorsque la paroi extérieure 18 poursuit sa course contre la paroi intérieure 20, les deux forces antagonistes F1 et F2 qui s'exercent selon une direction inclinée par rapport à la platine de réception 62, vont alors provoquer le déclipsage des pattes de clipsage 108, 110 et en conséquence, la désolidarisation de la platine de réception 62 des bras 58, 60. De la sorte, le boîtier 40 devient libre dans une certaine mesure par rapport à l'équerre 46'. Et il demeure en position fixe à travers le flanc d'appui 34. Son bord rabattu 42 demeure alors en applique contre les bordures de la lumière 41.

Si le caisson 16 ainsi déformé pénètre plus encore dans l'habitacle 13, alors les bras 58, 60 viennent à leur tour en appui contre le fond 44 du boîtier 40, et la force de résistance F2 est alors susceptible de provoquer le mouvement vertical de la platine de réception 62. De la sorte, le boîtier 40 demeure toujours en position fixe à travers le flanc d'appui 34.

En conséquence, le bord rabattu 42 du boîtier 40 est toujours en applique contre les bordures de la lumière 41 et n'est pas dangereux pour le passager.

## Revendications

1. Porte latérale de véhicule automobile comprenant :
- un caisson (16) comportant une paroi intérieure (20) et une paroi extérieure (18) s'étendant en regard l'une de l'autre ;
- une garniture (28) accrochée audit caisson (16) en regard de ladite paroi intérieur (20), ladite garniture présentant une portion en relief définissant, d'une part un espace libre (32) entre ladite garniture (28) et ladite paroi intérieur (20) et d'autre part, un flanc d'appui (34) formant accoudoir ;
- un boîtier (40) engagé à l'intérieur dudit espace libre (32) à travers ledit flanc d'appui (34), ledit boîtier présentant une bordure périphérique (42) solidaire dudit flanc d'appui pour maintenir ledit boîtier (40) en position fixe ;
- une équerre (46') présentant une partie de fixation (48') solidaire de ladite paroi intérieure (20) et une partie en porte-à-faux (50') s'étendant dans ledit espace libre (32, ledit boîtier (40) prenant appui sur ladite partie en porte-à-faux (50) ;
**caractérisée en ce que** la partie en porte-à-faux (50') comprend deux bras (58, 60) en regard l'un de l'autre solidaires de la partie de fixation (48') et une platine de réception (62) solidaire des deux bras (58, 60), la platine de réception (62) étant adaptée à se désolidariser des bras (58, 60) lorsque le caisson (16) est enfoncé et que ladite paroi intérieur (20) et ledit boîtier (40) sont entraînés en mouvement l'un vers l'autre, de manière à libérer ledit boîtier (40) de ladite paroi intérieure (20), par quoi ladite bordure périphérique (42) dudit boîtier (40) demeure solidaire (34) dudit flanc d'appui.

2. Porte latérale de véhicule automobile selon la revendication 1, **caractérisée en ce que** ladite platine de réception (62) s'étend entre lesdits deux bras (58, 60).

3. Porte latérale de véhicule automobile selon la revendication 1 ou 2, **caractérisée en ce que** la platine de réception (62) est mobile entre une position écartée de la partie de fixation (48') dans laquelle elle est en prise avec les deux bras opposés (58, 60) et une position rapprochée de la partie de fixation (48') dans laquelle elle est libre desdits deux bras opposés (58, 60).

4. Porte latérale de véhicule automobile selon l'une quelconque des revendications 1 à 3, **caractérisé en ce que** lesdits bras opposés (58, 60) s'étendent en escalier, et **en ce qu'**ils comprennent deux premières portions écartées l'une de l'autre, à distance de ladite partie de fixation (48') et respectivement prolongées par deux secondes portions libres rapprochées l'une de l'autre à l'opposé de ladite partie de fixation (48').

5. Porte latérale de véhicule automobile selon la revendication 4, **caractérisée en ce que** la platine de réception (62) comprend deux bords opposés (64, 66) présentant successivement deux premiers décrochement (80, 82) et deux seconds décrochements (84, 86) opposés définissant respectivement deux premières ailes (81, 83) écartées l'une de l'autre et deux secondes ailes (85, 87) rapprochées l'une de l'autre, lesdites premières et secondes ailes étant adaptées à venir en prise respectivement dans lesdites premières et secondes portions de bras opposés.

6. Porte latérale de véhicule automobile selon la revendication 5, **caractérisée en ce que** lesdits deux seconds décrochements opposés se prolongent respectivement à l'opposé desdits deux premiers décrochement par des pattes flexibles respectivement terminées par un ergot de blocage.

7. Porte latérale de véhicule automobile selon l'une quelconque des revendications 4 à 6, **caractérisée en ce que** lesdites premières et secondes portions de bras présentent respectivement des fentes en regard (88, 90 ; 92, 94) formant des glissières et s'étendant selon une composante perpendiculaire à ladite partie de fixation (48').

8. Porte latérale de véhicule automobile selon l'une quelconque des revendications 1 à 7, **caractérisée en ce que** ladite partie en porte-à-faux (50') est sensiblement inclinée par rapport à la normale à ladite partie de fixation (48').

9. Porte latérale de véhicule automobile selon l'une quelconque des revendications 1 à 8, **caractérisée en ce que** ledit boîtier (40) et ladite partie en porte-à-faux (84) sont reliés ensemble par une pièce de liaison vissable (104).

10. Porte latérale de véhicule automobile selon l'une quelconque des revendications 1 à 9, **caractérisée en ce que** ladite partie en porte-à-faux (50') comprend au moins un fût s'étendant à travers ladite platine de réception (62) pour former cheville.

## Patentansprüche

1. Seitentür eines Kraftfahrzeugs, umfassend:
- einen Kasten (16), der eine Innenwand (20) und eine Außenwand (18) aufweist, die einander gegenüber verlaufen;
- eine Verkleidung (28), die an dem Kasten (16) gegenüber der Innenwand (20) befestigt ist, wobei die Verkleidung einen erhabenen Abschnitt aufweist, der einerseits einen Freiraum (32) zwischen der Verkleidung (28) und der Innenwand (20) und andererseits einen Stützteil (34) definiert, der eine Armauflage bildet;
- ein Gehäuse (40), das durch das Stützteil (34) hindurch im Inneren des Freiraums (32) steckt, wobei das Gehäuse einen umlaufenden Rand (42) aufweist, der fest mit dem Stützteil verbunden ist und so das Gehäuse (40) an der richtigen Stelle hält;
- einen Winkel (46'), der einen Befestigungsabschnitt (48'), der fest mit der Innenwand (20) verbunden ist, und einen auskragenden Abschnitt (50') aufweist, der in den Freiraum (32) hinein verläuft, wobei das Gehäuse (40) auf dem auskragenden Abschnitt (50) aufliegt;
**dadurch gekennzeichnet, dass** der auskragende Abschnitt (50') zwei einander gegenüber liegende Arme (58, 60), die fest mit dem Befestigungsabschnitt (48') verbunden sind, und eine Aufnahmeplatte (62) umfasst, die fest mit den beiden Armen (58, 60) verbunden ist, wobei die Aufnahmeplatte (62) so ausgelegt ist, dass sie von den Armen (58, 60) getrennt wird, wenn der Kasten (16) eingedrückt wird, und dadurch, dass die Innenwand (20) und das Gehäuse (40) zueinander in Bewegung versetzt werden, sodass das Gehäuse (40) von der Innenwand (20) gelöst wird, wodurch der umlaufende Rand (42) des Gehäuses (40) fest mit dem Stützteil (34) verbunden bleibt.

2. Seitentür eines Kraftfahrzeugs nach Anspruch 1, **dadurch gekennzeichnet, dass** die Aufnahmeplatte (62) zwischen den beiden Armen (58, 60) verläuft.

3. Seitentür eines Kraftfahrzeugs nach Anspruch 1 oder 2, **dadurch gekennzeichnet, dass** die Aufnahmeplatte (62) zwischen einer zum Befestigungsabschnitt (48') entfernten Position, in der sie mit den beiden gegenüberliegenden Armen (58, 60) in Eingriff steht, und einer zum Befestigungsabschnitt (48') nahen Position bewegbar ist, in der sie von den beiden gegenüberliegenden Armen (58, 60) gelöst ist.

4. Seitentür eines Kraftfahrzeugs nach einem der Ansprüche 1 bis 3, **dadurch gekennzeichnet, dass** die gegenüberliegenden Arme (58, 60) stufenförmig verlaufen und dadurch, dass sie zwei erste Abschnitte umfassen, die voneinander entfernt in einem Abstand zu dem Befestigungsabschnitt (48') verlaufen und jeweils mit zwei zweiten freien Abschnitten verlängert sind, die gegenüber des Befestigungsabschnitts (48') beieinander liegen.

5. Seitentür eines Kraftfahrzeugs nach Anspruch 4, **dadurch gekennzeichnet, dass** die Aufnahmeplatte (62) zwei gegenüberliegende Ränder (64, 66) umfasst, die nacheinander gegenüberliegend zwei erste Rücksprünge (80, 82) und zwei zweite Rücksprünge (84, 86) aufweisen, die zwei voneinander entfernte erste Flügel (81, 83) beziehungsweise zwei beieinander liegende zweite Flügel (85, 87) definieren, wobei die ersten und zweiten Flügel so ausgelegt sind, dass sie in die ersten beziehungsweise zweiten Abschnitte der gegenüberliegenden Arme eingreifen.

6. Seitentür eines Kraftfahrzeugs nach Anspruch 5, **dadurch gekennzeichnet, dass** die zwei gegenüberliegenden zweiten Rücksprünge jeweils gegenüber von den beiden ersten Rücksprüngen mit flexiblen Beinen verlängert sind, die jeweils mit einem flexiblen Arretieransatz enden.

7. Seitentür eines Kraftfahrzeugs nach einem der Ansprüche 4 bis 6, **dadurch gekennzeichnet, dass** die ersten und zweiten Armabschnitte jeweils gegenüberliegende Schlitze (88, 90; 92, 94) aufweisen, die Gleitschienen bilden und entlang einer Komponente senkrecht zum Befestigungsabschnitt (48') verlaufen.

8. Seitentür eines Kraftfahrzeugs nach einem der Ansprüche 1 bis 7, **dadurch gekennzeichnet, dass** der auskragende Abschnitt (50') bezogen auf die Senkrechte zu dem Befestigungsabschnitt (48') im Wesentlichen geneigt ist.

9. Seitentür eines Kraftfahrzeugs nach einem der Ansprüche 1 bis 8, **dadurch gekennzeichnet, dass** das Gehäuse (40) und der auskragende Abschnitt (84) über ein einschraubbares Verbindungsstück (104) miteinander verbunden sind.

10. Seitentür eines Kraftfahrzeugs nach einem der Ansprüche 1 bis 9, **dadurch gekennzeichnet, dass** der auskragende Abschnitt (50') mindestens einen Schaft umfasst, der durch die Aufnahmeplatte (62) verläuft und auf diese Weise eine Hülse bildet.

## Claims

1. Motor vehicle side door comprising:
- a casing (16) having an inner wall (20) and an outer wall (18) that extend facing one another;
- a trim (28) attached to said casing (16) facing said inner wall (20), said trim having a portion in relief defining, on the one hand, a free space (32) between said trim (28) and said inner wall (20) and, on the other hand, a bearing flank (34) forming an armrest;
- a housing (40) engaged inside said free space (32) through said bearing flank (34), said housing having a peripheral border (42) as one with said bearing flank in order to hold said housing (40) in a fixed position;
- a bracket (46') having a fastening part (48') as one with said inner wall (20) and a cantilevered part (50') extending in said free space (32, said housing (40) bearing on said cantilevered part (50);
**characterized in that** the cantilevered part (50') comprises two arms (58, 60) that face one another and are as one with the fastening part (48') and a receiving plate (62) as one with the two arms (58, 60), the receiving plate (62) being designed to detach from the arms (58, 60) when the casing (16) is pushed in and said inner wall (20) and said housing (40) are driven in movement towards one another, so as to release said housing (40) from said inner wall (20), whereby said peripheral border (42) of said housing (40) remains as one (34) with said bearing flank.

2. Motor vehicle side door according to Claim 1, **characterized in that** said receiving plate (62) extends between said two arms (58, 60).

3. Motor vehicle side door according to Claim 1 or 2, **characterized in that** the receiving plate (62) is able to move between a position separated from the fastening part (48') in which it is engaged with the two opposite arms (58, 60) and a position close to the fastening part (48') in which it is free from said two opposite arms (58, 60).

4. Motor vehicle side door according to any one of Claims 1 to 3, **characterized in that** said opposite arms (58, 60) extend in a stepped manner, and **in that** they comprise two first portions that are separated from one another, at a distance from said fastening part (48'), and respectively extended by two free second portions that are close to one another at the opposite end from said fastening part (48').

5. Motor vehicle side door according to Claim 4, **characterized in that** the receiving plate (62) comprises two opposite edges (64, 66) successively having two first discontinuities (80, 82) and two second discontinuities (84, 86) that are opposite one another, respectively defining two first wings (81, 83) that are separated from one another and two second wings (85, 87) that are close to one another, said first and second wings being designed to engage respectively in said first and second opposite arm portions.

6. Motor vehicle side door according to Claim 5, **characterized in that** said two opposite second discontinuities are extended respectively at the opposite end from said two first discontinuities by flexible tabs respectively ending in a blocking lug.

7. Motor vehicle side door according to any one of Claims 4 to 6, **characterized in that** said first and second arm portions respectively have facing slots (88, 90; 92, 94) forming slideways and extending along a component perpendicular to said fastening part (48').

8. Motor vehicle side door according to any one of Claims 1 to 7, **characterized in that** said cantilevered part (50') is substantially inclined with respect to the normal to said fastening part (48').

9. Motor vehicle side door according to any one of Claims 1 to 8, **characterized in that** said housing (40) and said cantilevered part (84) are connected together by a screw connection piece (104).

10. Motor vehicle side door according to any one of Claims 1 to 9, **characterized in that** said cantilevered part (50') comprises at least one barrel that extends through said receiving plate (62) so as to form a plug.
